# EUROPEAN PATENT APPLICATION

(11) **EP 1 874 052 A1**
(43) Date of publication of application: **02.01.2008**
(21) Application number: 06013587.8
(22) Date of filing: 30.06.2006
(51) Int. Cl.: H04N 7/173

(54) **Method and system for sharing video meta data**

(71) Applicant: NOKIA SIEMENS NETWORKS GMBH & CO. KG, 81541 München (DE)
(72) Inventor: Gladines, Sven E. Jan, 2440 Geel (BE)
(74) Representative: Fischer, Michael

(57) **Abstract**

In order to automatically share information about consumed video content among end users, video content and meta data are transmitted from a video content distributor device (110) to a first client device (120). The meta data comprises information about the video content. The first client device (120) comprises a content receiver (121), a meta data processor (122) and a presence agent (123). The video content is processed in the content receiver (121) and the meta data is processed in the meta data processor (122) by generating a plurality of presence information fields. The presence information fields are then forwarded to the presence agent (123). At least a subset of the plurality of presence information fields is forwarded from the presence agent (123) to a presence server (130). The subset of presence information fields is published on the presence server for being transmitted to a second client device and/or to a presence aware server.

## Description

This invention relates to a method and a system for sharing video meta data among a group of end users.

In a presence application, a client device or a group of client devices is informed that another client device is currently online. Typically, the application focuses on presence information to either desktop applications or mobile devices. The basic set of presence information typically comprises the user status, informing if the client device of an end user is currently online. However, known extension information can comprise for example:
- the mood of an end user who is using the client device;
- the location of the client device and thus the location of the user; and
- a personal note.

Most of the extension information has to be typed into the end user's client device manually, or requires complicated technology, like for example automatically retrieving the information about the location of a mobile phone.

Presence was originally defined by the Internet Engineering Task Force (IETF) in Request For Comment (RFC) 2778. Presence relates to the 'status' of an end user and to the set of his communication devices. Examples of presence information include online/offline, geographical location or free text notes. Presence information is by definition shared among end users and/or applications, either in peer-to-peer communication or a client-server approach.

Presence-aware applications, which usually run on a presence aware server use presence information to build their business logic. An example of a presence aware application is a 'smart advertising service', which distributes advertising to end users depending on, for example, their current location.

End users of such a presence-aware application need not necessarily distribute presence information themselves. For example, a presence-aware application could distribute a map to some users containing the current location of their children. The parents only consume the map, they (or their devices) do not consume or emit presence information themselves.

For television, it would be useful to share presence information among the end users. This way, an end user can be informed of what video stream or television program another end user is currently consuming. So far, the exchange of this information was only possible by transferring the information manually among the end users.

It is therefore the objective of this invention to automatically share information about consumed video content among end users.

This objective is solved by the measures taken according to claim 1 and claim 5:

In order to perform the inventive method, video content and meta data are transmitted from a video content distributor device to a first client device. The meta data comprises information about the video content. The first client device comprises a content receiver, a meta data processor and a presence agent. The video content is processed in the content receiver and the meta data is processed in the meta data processor by generating a plurality of presence information fields. The presence information fields are then forwarded to the presence agent. At least a subset of the plurality of presence information fields is forwarded from the presence agent to a presence server. The subset of presence information fields is published on the presence server for being transmitted to a second client device and/or to a presence aware server.

In order to provide an inventive system that comprises means suitable to perform the inventive method, the system comprises a video content distributor device, a first client device, a second client device and a presence server. The first client device comprises a content receiver, a meta data processor and a presence agent. The video content distributor device is connected to the first client device. The presence server is connected to the first client device and to the second client device. The video content distributor device comprises means for transmitting video content and meta data to the first client device. The content receiver comprises means for processing the video content. The meta data processor comprises means for processing the meta data by generating a plurality of presence information fields. The meta data processor comprises means for forwarding the presence information fields to the presence agent. The first client device comprises means for forwarding at least a subset of the plurality of presence information fields to the presence server. The presence server comprises means for publishing the subset of presence information fields on the presence server for being downloaded by the second client device and/or by a presence aware server.

Advantageous embodiments are presented in the dependent claims:

The video content and the meta data can be transmitted in a video stream from the video content distributor device to the content receiver. The content receiver extracts the video content and the meta data from the video stream. The meta data is then transmitted from the content receiver to the meta data processor. This way, the video content and the meta data can be transmitted in a single stream from the video content distributor device to the client device. This is especially advantageous if a codex is used that encodes video content along with meta data, like for example MPEG encoded streams, which include content description.

The video content can also be transmitted from the video content distributor device to the content receiver in a video stream, while the meta data are transmitted from the video content distributor device to the meta data processor in a separate data stream. The advantage in this method is that all video coding and/or streaming methods can be supported. Some video encoding/decoding algorithms only compromise actual video data and do not support meta data to be included in the encoded data. In this case, meta data can only be distributed in a separate data stream.

The retrieval of the meta data content does not necessarily need to be pushed without request from the video content distributor device to the client device. Instead, it can also be triggered by the client. For example the client device can periodically poll for meta data, which is then sent by the server.

In a preferred embodiment, several or all of the client devices are able to share the meta data of the video content which is consumed by the other client devices. Therefore, according to the language of the claims, the second client device comprises a second content receiver, a second meta data processor and a second presence agent.

The invention is in the following described based on the figures which represent embodiments of the invention. Thereby
- Figure 1: depicts a system for sharing video meta data in a first embodiment; and
- Figure 2: depicts a system for sharing video meta data in a second embodiment.

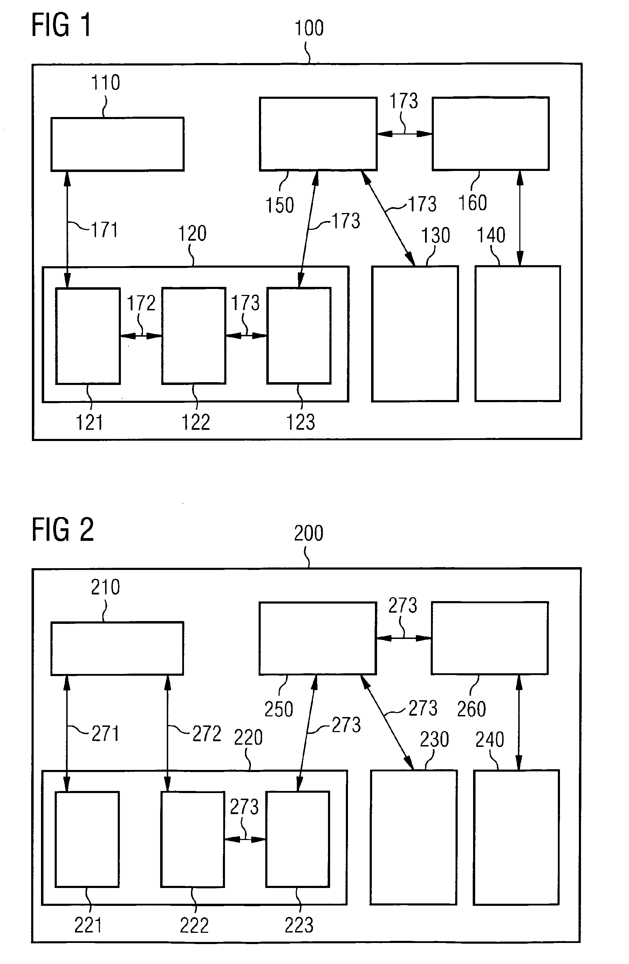

Figure 1 depicts a system 100 for sharing video meta data in a first embodiment. The system 100 comprises a video content distributor device 110, a first client device 120, a second client device 130, a third client device 140, a presence server 150 and a presence aware server 160. The client device 120 is connected to the video content distributor device 110. The client devices 120, 130 are connected to the video presence server and the client device 140 is connected to the presence aware server 160. The presence aware server 160 is connected to the presence server 150. The client device 120 comprises a content receiver 121, a meta data processor 122 and a presence agent 123. The client devices 130, 140 also comprise a presence agent.

The video content distributor device 110 is designed as a means 110 for transmitting video content and meta data to a client device. The content receiver 121 is designed as a means 121 for processing video content. The meta data processor 122 is designed as a means 122 for processing meta data by generating a plurality of presence information and as a means 122 for forwarding presence information fields to the presence agent. The first client device 120 is designed as a means 120 for forwarding presence information fields to the presence server 150. The presence server 150 is designed as a means 150 for publishing presence information fields for being downloaded by the second client device 130 and/or by the presence aware server 160.

In order to perform the inventive method, video content and meta data about the video content are transmitted in a video stream 171 from the video content distributor device 110 to the content receiver 121. The content receiver 121 extracts the video content and the meta data from the video stream 171. The video content is processed by the content receiver 121, while the meta data is passed on in a data stream 172 to the meta data processor 122. The meta data is processed in the meta data processor 122 by generating a plurality of presence information fields 173.

A presence information field is a data structure that describes a piece of presence information. Presence information fields are transmitted between presence agent and the presence server (or between presence agents) in an agreed encoding format. This format may be the Presence Information Document Format (PIDF), defined by IETF RFC 3863, but it may also be some proprietary format. Typical examples of the type of information which can be represented as presence information include 'channel', 'program', 'synopsis', a hyperlink to the Internet home page of a series, etc.

After a presence information field 173 is generated in the meta data processor, it is forwarded to the presence agent 123. At least a subset of the plurality of presence information fields 173 is forwarded from the presence agent 123 to a presence server 150. The presence information fields 173 are published by the presence server 150 for being transmitted to the other client devices 130, 140 or to the presence aware server 160.

The presence-aware server eliminates the need for end user devices to support the interface to the presence server and the need to be able to interpret the raw presence information fields. The presence-aware server consumes the presence information fields, decodes them, interprets them according to its business logic and then communicates with its end users in an application-specific manner.. In the example given above, this could mean that the presence-aware server interprets the presence information fields describing the location of the children, and based on that information builds a JPEG picture containing a map and transfers that picture to the end user devices. These clients then only need to be able to show JPEG pictures. Another example is an instant messenger service application, which interprets the TV related presence information fields and then updates the nickname of the user by appending the string "is watching 'Live Snooker' on BBC 1*ⁿ* .

The first embodiment as described above enables the client devices 120, 130 to display presence information of the client device 120. In a variant of the first embodiment, each of the client devices 120, 130, 140 comprises a content receiver, a meta data processor and a presence agent, and each of the client devices is connected to the video content distributor device 110, to the presence server 150 and to the presence aware server 160. This way each of the client devices can receive presence information from the other client devices.

Figure 2 depicts a system for sharing video meta data in a second embodiment. The system of figure 2 is similar to the system of figure 1. It also comprises a video content distributor device 210, a first client device 220, and a second client device 230, a third client device 240, a presence server 250 and a presence aware server 260. The client device 220 comprises a content receiver 221, a meta data processor 222 and a presence agent 223. The client devices 230, 240 also comprise a presence agent.

The video content distributor device 210 is designed as means 210 for transmitting video content and meta data to the first client device 220. The content receiver 221 is designed as means 221 for processing the video content. The meta data processor 222 is designed as means 222 for processing the meta data by generating a plurality of presence information and as means 222 for forwarding the presence information fields to the presence agent. The first client device 220 is designed as means 220 for forwarding at least a subset of the plurality of presence information fields to the presence server 250. The presence server 250 is designed as means 250 for publishing the subset of presence information fields on the presence server for being downloaded by the second client device 230 and/or by a presence aware server 230.

In order to perform the inventive method, video content is transmitted from the video content distributor device 210 to the content receiver 221 in a video stream 271, while meta data about the video content is transmitted from the video content distributor device 210 to the meta data processor 222 in a separate data stream 272. The video content is processed by the content receiver 221, while the meta data is processed in the meta data processor 222 by generating a plurality of presence information fields 273. The presence information fields 273 are then forwarded to the presence agent 223. At least a subset of the plurality of presence information fields 273 is forwarded from the presence agent 223 to a presence server 250. The presence information fields 273 are published by the presence server 250 for being transmitted to the other client devices 230 or to the presence aware server 260.

Again for the embodiment of figure 2, a maximum flexibility for exchanging presence information between the client devices can be achieved when each of the client devices 220, 230, 240 is connected to the video content distributor device 210, to the presence server 250 and to the presence aware server 260 and when each of the client devices 220, 230, 240 comprises a content receiver, a meta data processor and a presence agent.

### List of Reference Signs:

- 100, 200: system
- 110, 210: video content server, video content distributor device, means for transmitting video content and meta data to the first client device
- 120, 220: client device, first client device
- 121, 221: content receiver, means for processing video content
- 122, 222: meta data processor, means for processing meta data
- 123, 223: presence agent, means for forwarding at least a subset of the plurality of presence information fields to a presence server
- 130, 230: client device, second client device
- 140, 240: client device, third client device
- 150, 250: presence server, means for publishing presence information fields
- 160, 260: Presence aware server
- 171, 271: video stream
- 172, 272: data stream
- 173, 273: presence information field

## Claims

**1.** Method for sharing meta data, comprising the steps of
(a) transmitting video content and meta data from a video content distributor device (110, 210) to a first client device (120, 220), whereas the first client device (120, 220) comprises a content receiver (121, 122), a meta data processor (122, 222) and a presence agent (123, 223), and the meta data comprises information about the video content,
(b) processing the video content in the content receiver (121, 221),
(c) processing the meta data in the meta data processor (122, 222) by generating a plurality of presence information fields,
(d) forwarding the presence information fields to the presence agent (123, 223),
(e) forwarding at least a subset of the plurality of presence information fields to a presence server (150, 250),
(f) publishing the subset of presence information fields on the presence server (150, 250) for being transmitted to a second client device (130, 230) and/or to a presence aware server (160, 260).

**2.** Method according to claim 1,
**characterized in that**
step (a) is performed by
transmitting the video content and the meta data in a video stream (171) from the video content distributor device to the content receiver,
extracting the video content and the meta data from the video stream,
transmitting the meta data from the content receiver (121) to the meta data processor (122).

**3.** Method according to claim 1
**characterized in that**
step (a) is performed by
transmitting the video content from the video content distributor device (210) to the content receiver in a video stream(271)
transmitting the meta data from the video content distributor device (210) to the meta data processor (222) in a separate data stream (272).

**4.** Method according to anyone of the preceding claims
**characterized in that**
the second client device (130, 230) comprises a second content receiver, a second meta data processor and a second presence agent.

**5.** System for sharing meta data comprising
a video content distributor device (110, 210), a first client device (120, 220), a second client device (130, 230) and a presence server (150, 250);
the first client device (120, 220) comprising a content receiver (121, 221), a meta data processor (122, 222) and a presence agent (123, 223);
the video content distributor device (110) being connected to the first client device (120, 220);
the presence server (150, 250) being connected to the first client device (120, 220) and to the second client (130, 230) device;
the video content distributor device (110, 210) comprising means (110, 210) for transmitting video content and meta data to the first client device;
the content receiver (121, 221) comprising means (121, 221) for processing the video content;
the meta data processor (122, 222) comprising means for processing the meta data by generating a plurality of presence information fields and means for forwarding the presence information fields to the presence agent (123, 223); the presence agent (123, 223) comprising means for forwarding at least a subset of the plurality of presence information fields to the presence server (150, 250);
the presence server (150, 250) comprising means (150, 250) for publishing the subset of presence information fields for being downloaded by the second client (130, 230) device and/or by a presence aware server (160, 260).

**6.** System according to claim 5,
**characterized in that**
the means (110) for transmitting video content and meta data to the first client device comprise
means for transmitting the video content and the meta data in a video stream (171) from the video content distributor device (110) to the content receiver (121),
the content receiver (121) comprising means for extracting the video content and the meta data from the video stream (171) and means for transmitting the meta data from the content receiver to the meta data processor.

**7.** System according to claim 5,
**characterized in that**
the means (210) for transmitting video content and meta data to the first client device comprise
means for transmitting the video content from the video content distributor device to the content receiver in a video stream (271) and
means for transmitting the meta data from the video content distributor device to the meta data processor in a separate data stream (272).

**7.** System according to any one of the claims 4 to 6,
**characterized by**
a presence aware server (160, 260), which is connected to the presence server (150, 250) and which comprises means for processing the subset of presence information fields and means for forwarding a processed result to the second client device (130, 230) and/or to a third client device (140).

**8.** System according to any one of the claims 4 to 7,
**characterized in that**
the second client device (130) second presence agent.
